# EUROPÄISCHE PATENTSCHRIFT

(11) **EP 1 854 660 B1**
(45) Veröffentlichungstag und Bekanntmachung des Hinweises auf die Patenterteilung: **29.02.2012**
(21) Anmeldenummer: 07107725.9
(22) Anmeldetag: 08.05.2007
(51) Int. Cl.: B61D 33/00, B60N 2/427, B60N 2/42

(54) **Fahrzeugsitz mit im Fuss angeordneten Elementen zur Absorption von Aufprallenergie**
Vehicle seat with a leg structure comprising impact energy absorbing elements
Siège de véhicule avec une structure de pied comportant des éléments d'absorption de l'énergie d'impact

(30) Priorität: 12.05.2006 DE 102006022159
(43) Veröffentlichungstag der Anmeldung: 14.11.2007
(73) Patentinhaber: GRAMMER AG, 92224 Amberg (DE)
(72) Erfinder: Deml, Johann, 92554, Thanstein (DE); Übelacker, Roland, 92536, Pfreimd (DE)
(74) Vertreter: Hannke, Christian

(56) Entgegenhaltungen:
- DE-A1- 10 130 632
- DE-C1- 10 033 340
- FR-A- 2 684 955
- GB-A- 2 250 431
- US-A- 2 933 127
- US-A- 5 788 185
- US-A- 5 813 649

## Beschreibung

Die Erfindung betrifft einen Schienenfahrzeugpassagiersitz, insbesondere für Hochgeschwindigkeitszüge. Der Schienenfahrzeugpassagiersitz kann beispielsweise für den Führer eines derartigen Beförderungsmittels vorgesehen sein, oder für einen Passagier im klassischen Sinne, also eine Person, die von einem derartigen Beförderungsmittel transportiert wird, ohne es zu steuern.

Passagiersitze in - beispielsweise in Deutschland derzeit unter der Bezeichnung ICE oder in Frankreich unter der Bezeichnung TGV betriebenen - Hochgeschwindigkeitszügen weisen bekanntermaßen eine Sitzfläche, eine Rückenlehne und einen Fuß zur Abstützung der Sitzfläche bzw. der Einheit aus Sitzfläche und Rückenlehne auf dem Boden des Zuges auf. Die Sitzfläche sowie die Rückenlehne weisen dabei in der Regel jeweils einen verhältnismäßig harten, tragenden "Kern" auf, der von einer Polsterung bedeckt ist. Die hier als "Kern" bezeichnete Konstruktion kann dabei prinzipiell auf verschiedenste Weise gestaltet sein, und beispielsweise Platten, Streben oder dergleichen aufweisen. Die Rückenlehne ist dabei gegenüber der Sitzfläche häufig einstellbar gestaltet, so dass insbesondere der Neigungswinkel der Rückenlehne gegenüber der Sitzfläche verändert werden kann. In der jeweils eingestellten Stellung der Rückenlehne ist diese dabei in der Regel relativ starr mit der Sitzfläche verbunden bzw. gegenüber dieser angeordnet. Der Fuß wird dabei beispielsweise von einem - oder zwei in Sitzquerrichtung beabstandeten - platten- oder säulenartigen Element(en) ge bildet, das im Wesentlichen vertikal oder geneigt zur vertikalen Richtung verläuft, um die Sitzfläche gegenüber dem Boden des Zuges auf Abstand zu halten, und an das unten ein in Sitzlängsrichtung, also in Blickrichtung eines auf dem Sitz sitzenden Passagiers, verlaufender Träger angeformt ist. Dieser Träger dient dabei der standfesteren Abstützung sowie der Montage des Passagiersitzes auf dem Boden des Zuges bzw. eines Wagons dieses Zuges. Ferner kann der Fuß bei derartigen bekannten Sitzen am oberen, der Sitzfläche zugewandten Ende des oder jedes dieser plattenartigen bzw. säulenartigen Elemente einen weiteren Träger oder eine Platte oder dergleichen aufweisen, die an das betreffende säulenartige Element angeformt ist und sich im Wesentlichen horizontal erstreckt, um einen Auflage- und Montagebereich für die Sitzfläche zu bilden. Mittels Schrauben oder dergleichen wird der Fuß am Boden des Zuges sowie an der Sitzfläche fest gehalten. Das bzw. die säulen- oder plattenartige(n) Element(e) mit dem bzw. der bzw. den als Auflage- und Montagebereich(e) für die Sitzfläche dienenden Träger(n) oder Platte(n) sowie dem oder den für die Auflage auf bzw. Verbindung mit dem Boden vorgesehenen Träger(n) können dabei als einstückiges, massives Gussteil ausgebildet sein.

Bekannte Passagiersitze - insbesondere der vorgenannten Art - bilden, zumindest wenn sie am Boden eines Zuges fest befestigt bzw. verschraubt sind, insgesamt relativ harte, starre Einheiten, die somit eine nicht unerhebliche Verletzungsgefahr für Passagiere im Falle eines Crashs bzw. Unfalls des Zuges bewirken. So besteht beispielsweise die Gefahr, dass ein im Falle eines Crashs bzw. Unfalls durch den Zug geschleuderter Passagier mit hoher Geschwindigkeit gegen einen derartigen Sitz prallt und, da dieser sich als starres, unnachgiebiges Hindernis darstellt, erhebliche Verletzungen dadurch erleidet. Ferner kann beispielsweise ein auf einem hinteren Sitz sitzender Passagier erhebliche Knieverletzungen erleiden, wenn er im Falle eines Crashs bzw. Unfalls des Zuges mit seinem Knie gegen die Rückseite eines vorderen Sitzes prallt. In besonders harten Aufprallsituationen kann ggf. sogar die Gefahr bestehen, dass der Sitz aus seiner Bodenverankerung gerissen wird, und als Gesamtheit durch den Zug geschleudert wird.

Weiterhin sind aus der US 2933127 A Passagiersitze für Beförderungsmittel, insbesondere für Luftfahrzeuge bekannt, die eine Strebenanordnung als Fußteil des Sitzes aufweisen, wobei diese Strebeneinrichtung eine fünfte Streben zur Absorption von Rotationsenergie des Sitzes, die aufgrund der Sitzneigung im Falle einer Geschwindigkeitsverzögerung, wie bei einem Crash, auftreten kann, aufweist. Ein Dämpfungselement ist im Bereich des hinteren Strebenaufbaus integriert, das ein Begrenzungselement beinhaltet, um eine eingeschränkte Vorwärtsbewegung um den Massepunkt des Passagiersitzes bei einer auftretenden Geschwindigkeitsverzögerung zu ermöglichen.

Vor diesem Hintergrund liegt der Erfindung nun die Aufgabe zugrunde, einen Schienenfahrzeugpassagiersitz für Hochgeschwindigkeitszüge zu schaffen, der - zumindest im in einem Zug montierten Zustand - im Falle eines Crashs bzw. Unfalls des Zuges die Gefahr bzw. Schwere von Verletzungen der Passagiere mindert .

Erfindungsgemäß wird ein Schienenfahrzeugpassagiersitz gemäß Anspruch 1 vorgeschlagen. Bevorzugte Weiterbildungen sind Gegenstand der Unteransprüche.

Es wird also erfindungsgemäß ein Schienenfahrzeugpassagiersitz für Schienenfahrzeuge, wie beispielsweise für Hochgeschwindigkeitszüge, vorgeschlagen, der eine Sitzfläche, eine Rückenlehne sowie wenigstens einen die Sitzfläche bzw. die Sitzfläche sowie die Rückenlehne tragenden Fuß aufweist. Der Fuß wird von einer Strebeneinrichtung gebildet. Diese Strebeneinrichtung weist eine erste Strebe sowie eine zweite Strebe auf. Die erste und die zweite Strebe verlaufen jeweils im Wesentlichen horizontal und in vertikaler Richtung beabstandet zueinander. Ferner weist die Strebeneinrichtung eine dritte sowie eine vierte Strebe auf. Mittels dieser dritten sowie dieser vierten Strebe sind die erste und die zweite Strebe in vertikaler Richtung auf Abstand gehalten. Die dritte und die vierte Strebe sind jeweils mit der ersten und der zweiten Strebe gekoppelt und halten die erste und die zweite Strebe in vertikaler Richtung auf Abstand, so dass diese vier Streben einen rechteckförmigen Rahmen ausbilden.Weiterhin weist der Fuß wenigstens eine weitere, fünfte, Strebe auf. Diese fünfte Strebe erstreckt sich geneigt zur horizontalen Richtung. Die horizontale Richtung ist dabei insbesondere die Richtung bzw. eine Richtung, die sich im Wesentlichen parallel zum Wagonboden bzw. zur Erdoberfläche erstreckt, wenn der Schienenfahrzeugpassagiersitz in einem Zug bzw. Wagon montiert ist. Die fünfte Strebe erstreckt sich innerhalb des von den zuvor angesprochenen vier Streben gebildeten Rahmens. Dies bezieht sich insbesondere auf eine Seitenansicht des Rahmens. Die fünfte Strebe kann sich beispielsweise so innerhalb des Rahmes erstrecken, dass sie - insbesondere in der angesprochenen Seitenansicht - vollständig innerhalb des Rahmens angeordnet ist, oder so, dass sie in ihren beiden Endbereichen jeweils mit dem Rahmen - insbesondere in der angesprochenen Seitenansicht - einen Schnittpunkt ausbildet, oder so, dass sie in einem ihren beiden Endbereiche jeweils mit dem Rahmen - insbesondere in der angesprochenen Seitenansicht - einen Schnittpunkt ausbildet und in Richtung des anderen Endes gesehen vollständig innerhalb des Rahmens angeordnet ist. Die fünfte Strebe ist in ihren beiden Endbereichen mit dem Rahmen gekoppelt, wobei die fünfte Strebe zwischen ihren Koppelstellen, mittels welchen sie mit dem Rahmen gekoppelt ist, zumindest einen ersten Abschnitt aufweist, in dem sie gefaltet oder gewellt oder gekrümmt oder abgeknickt verläuft und ein Flacheisen ist, das derart gestaltet ist, dass bei einer vorbestimmten auf den Rahmen wirkenden Belastung der wenigstens eine erste Bereich gestreckt beziehungsweise verlängert wird und zwar insbesondere unter plastischer Verformung. Die Kopplungsstellen der jeweiligen aneinander grenzenden Streben des rechteckförmigen Rahmens sind von Schweißstellen gebildet.

Es kann vorgesehen sein, dass die Streben des Rahmens, mit welchen die fünfte Strebe gekoppelt ist, für diese jeweilige Kopplung abragende Flansche tragen, über welche die fünfte Strebe mit dem Rahmen gekoppelt ist.

Die fünfte Strebe weist zwischen ihren Koppelstellen, mittels welchen sie mit dem Rahmen gekoppelt ist, zumindest einen ersten Abschnitt auf, in dem sie gefaltet oder gewellt oder gekrümmt oder abgeknickt verläuft.

Die erste, die zweite, die dritte sowie die vierte Strebe sind vorzugsweise jeweils gerade gestaltet. Diese vier Streben spannen insbesondere im Wesentlichen eine Ebene auf.

Es ist insbesondere vorgesehen, dass die erste und die zweite Strebe jeweils mit der dritten und der vierten Strebe gekoppelt sind. Die entsprechenden Koppelstellen sind dabei insbesondere so ausgebildet, dass die jeweiligen dort aneinandergrenzenden bzw. miteinander gekoppelten Streben unter einer vorbestimmten, auf den Fuß wirkenden Belastung relativ zueinander beweglich sind. Dieses ist vorzugsweise so, dass die Koppelstellen so sind, dass die dort jeweils aneinandergrenzenden Streben unter einer vorbestimmten, auf den Fuß wirkenden Belastung relativ zueinander verschwenkbar sind, und zwar vorzugsweise um einen Winkel, der größer als 5°, bevorzugt größer als 10°, bevorzugt größer als 15°, bevorzugt größer als 20°, bevorzugt größer als 25°, bevorzugt größer als 30°, bevorzugt größer als 35° ist. Es kann - insbesondere auch überlagert zur vorgenannten Verschwenkbarkeit bzw. um diese zu ermöglichen - auch vorgesehen sein, dass die entsprechenden Koppelstellen der den Rahmen bildenden Streben so ausgebildet sind, dass die jeweiligen Abschnitte der dort aneinandergrenzenden bzw. miteinander gekoppelten Streben, mit denen diese jeweils beiden Streben miteinander gekoppelt sind, unter einer vorbestimmten, auf den Fuß wirkenden Belastung translatorisch relativ zueinander beweglich sind. Beispielsweise kann vorgesehen sein, das diese jeweils im Bereich der jeweiligen Koppelstelle aneinandergrenzenden Abschnitte unter einer vorbestimmten, auf den Fuß wirkenden Belastung translatorisch um eine Strecke relativ zueinander beweglich sind, die größer als 1 cm, bevorzugt größer als 2 cm, bevorzugt größer als 3 cm, bevorzugt größer als 5 cm, bevorzugt größer als 8 cm, bevorzugt größer als 10 cm, bevorzugt größer als 15 cm, bevorzugt größer als 20 cm ist. Die in verschiedenen Ausgestaltungen, beispielhaft vorerwähnte Relativbeweglichkeit der Streben des Rahmens unter einer vorbestimmten Belastung des Rahmens ist insbesondere so, dass der Rahmen dabei erhalten bleibt bzw. die im Bereich der jeweils aneinandergrenzenden Streben gegebene Kopplung dieser jeweils zwei Streben des Rahmens erhalten bleibt, wobei sich insbesondere die Winkelverhältnisse des Rahmens bzw. seiner Streben zueinander ändern. Besonders bevorzugt bildet der Rahmen eine umfangsmäßig geschlossene Kontur, wobei die Koppelstellen der den Rahmen bildenden Streben derart ausgebildet sind, dass der Rahmen bei einer durch eine vorbestimmte Belastung bewirkten Relativbewegung jeweils aneinandergrenzender Streben umfangsmäßig geschlossen bleibt.

Es ist insbesondere vorgesehen, dass die fünfte Strebe bzw. die fünften Streben unter einer vorbestimmten auf den Rahmen wirkenden Belastung - insbesondere plastisch - verformt bzw. gestreckt werden. Dies ist insbesondere so, dass die fünfte Strebe bzw. die fünften Streben dabei in ihrem gefalteten bzw. gewellten bzw. gekrümmten bzw. abgewinkelten Bereich gestreckt werden, und zwar insbesondere unter plastischer Verformung. Dies kann insbesondere so sein, dass der betreffende gefaltete bzw. gewellte bzw. gekrümmte bzw. abgewinkelte Bereich der fünften Strebe bzw. der fünften Streben derart gestreckt wird, dass sich sein Verlauf - insbesondere bei anhaltender vorbestimmter Belastung - zunehmend einem geraden Verlauf annähert. Ein etwaiger gefalteter Bereich kann also beispielsweise dabei zunehmend aufgefaltet werden. Es ist insbesondere vorgesehen, dass sich unter einer vorbestimmten auf den Fuß wirkenden Belastung der Abstand derjenigen Koppel- bzw. Verbindungsstellen, an denen die fünfte Strebe bzw. die jeweilige fünfte Strebe mit dem Rahmen gekoppelt ist, vergrößert, und zwar insbesondere als Folge einer entsprechenden Verformung des gefalteten bzw. gewellten bzw. gekrümmten bzw. abgewinkelten Bereichs der betreffenden fünften Strebe. Dabei ist insbesondere vorgesehen, dass infolge einer vorbestimmten auf den Rahmen wirkenden Belastung dessen Streben relativ zueinander bewegt werden, so dass die mit diesem Rahmen gekoppelte, wenigstens eine fünfte Strebe dabei auf Streckung belastet wird, und sich insbesondere entsprechend verformt bzw. streckt bzw. auffaltet. Bei einer solchen Relativbewegung der Streben des Rahmens wird insbesondere auch die Einheit aus der Sitzfläche und der Rückenlehne über die entsprechende Kopplung mit dem oder den Füßen entsprechend bewegt.

Die fünfte Strebe bzw. die fünften Streben können als Anschlag für die Verformbarkeit des Rahmens bzw. als Anschlag zur Begrenzung der Relativbeweglichkeit der diesen Rahmen bildenden Streben wirken. Dieses kann so sein, dass diese Verformbarkeit solange gegeben ist, so lange die fünfte oder eine fünfte Strebe unter vorbestimmter Belastung nicht oder noch nicht so gestreckt ist, dass sie gerade ist, und dann, wenn diese fünfte Strebe gerade ist, eine weitere Verformung des Rahmens bzw. eine weitere Relativbewegung der ihn bildenden Streben durch diese fünfte Strebe verhindert bzw. blockiert wird.

Es kann beispielsweise vorgesehen sein, dass ein rückwärtig auf den Schienenfahrzeugpassagiersitz wirkender Schlag bzw. eine rückwärtig auf den Schienenfahrzeugpassagiersitz wirkende Belastung bzw. Kraft vorbestimmter Größe eine derartige Verformung des Rahmens und der fünften Strebe bewirkt bzw. bewirken kann. Beispielsweise kann vorgesehen sein, dass eine vorbestimmte in etwa in Kniehöhe bzw. in einer Höhe von 35 bis 70 cm, vorzugsweise 40 bis 60 cm, vorzugsweise 45 bis 55 cm rückwärtig auf den Schienenfahrzeugpassagiersitz wirkende Belastung bzw. Kraft vorbestimmter Größe eine derartige Verformung des Rahmens und der fünften Strebe bewirkt bzw. bewirken kann. Dabei kann vorgesehen sein, dass die Verformung des Rahmens und der fünften Strebe nur bewirkt wird, wenn die Kraft größer als 3000N, vorzugsweise größer als 3300 N vorzugsweise größer als 3500 N, vorzugsweise größer als 3700 N, vorzugsweise größer als 4000 N ist. Eine derartige Auslösekraft kann aber auch eine abweichende Größe aufweisen. Ferner kann der Fuß auch auf einen abweichenden Kraftangriffspunkt und auf eine entsprechende, dort als Auslösekraft wirkende Kraft ausgelegt sein.

Es kann beispielsweise mittels einer bevorzugten Gestaltung der Erfindung bewirkt werden, gemäß welcher - wie vorstehend angesprochen - eine vorbestimmte, in etwa in Kniehöhe bzw. in einer Höhe von 35 bis 70 cm, vorzugsweise 40 bis 60 cm, vorzugsweise 45 bis 55 cm oberhalb des Bodens eines Wagons - wie Wagon eines Schienenfahrzeuges - rückwärtig auf den Schienenfahrzeugpassagiersitz wirkende Belastung bzw. Kraft vorbestimmter Größe eine derartige Verformung des Rahmens und der fünften Strebe bewirkt bzw. bewirken kann, dass im Falle eines Zugunfalls bzw. Crashs die Schwere etwaiger Knieverletzung einer hinter dem (beispielhaften) erfindungsgemäßen Schienenfahrzeugpassagiersitz sitzenden Person gemindert wird; dieses kann beispielsweise so sein, dass in dem Fall, dass das Knie rückwärtig mit einer gewissen Kraft, beispielsweise entsprechend den oben angegebenen Wertebereichen, auf den Schienenfahrzeugpassagiersitz prallt, der Rahmen des Fußes sowie die fünfte Strebe derart verformt wird, dass der Sitz im Bereich der Aufprallstelle des Knies der Belastung ausweicht bzw. nachgibt.

Vorzugsweise weist der Schienenfahrzeugpassagiersitz zwei Füße der erläuterten Art auf, die in Querrichtung des Schienenfahrzeugpassagiersitzes benachbart bzw. beabstandet sind, wobei sich beispielsweise jeweilige, vom jeweiligen Rahmen des betreffenden Fußes aufgespannte Ebenen parallel zu einander erstrecken.

Es kann vorgesehen sein, dass zwei fünfte Streben so angeordnet sind, dass sie sich kreuzen.

In einer vorteilhaften Gestaltung ist die oder zumindest eine fünfte Strebe im Bereich diagonal gegenüberliegender Koppelstellen jeweils aneinandergrenzender Streben des Rahmens mit diesem Rahmen verbunden. Es kann auch vorgesehen sein, dass die zumindest eine fünfte Strebe an anderen Stellen am Rahmen gehalten ist.

Die fünfte Strebe kann beispielsweise ein Flacheisen sein bzw. aus einem solchen gefertigt sein.

Der Rahmen, der im Wesentlichen rechteckig ist, kann auch quadratisch gebildet sein, wobei senkrecht aufeinander stehende Seiten der Rechteckform unterschiedlich lang sein können.

Aus dem allgemeinen Stand der Technik ist es bekannt, dass der Rahmen beispielsweise auch eine Trapezform aufweisen kann, und zwar insbesondere eine symmetrische oder eine asymmetrische Trapezform. Es kann vorgesehen sein, dass bei einer solchen Trapezform die bodenzugewandete horizontal verlaufende Seite länger als die der Sitzfläche des Schienenfahrzeugpassagiersitz zugewandete, horizontal verlaufende Seite ist. Ferner kann vorgesehen sein, dass der jeweilige Winkel, den die dritte bzw. vierte Strebe mit der horizontalen Richtung einschließt, im Bereich zwischen 45° und 85°, vorzugsweise im Bereich zwischen 55° und 85°, vorzugsweise im Bereich zwischen 65° und 85°, vorzugsweise im Bereich zwischen 75° und 85° ist, wobei der der dritten Streben zugeordnete Winkel dem der vierten Strebe zugeordneten Winkel entsprechen kann, oder von diesem verschieden sein kann. Beispielsweise kann die rückwärtige bzw. der Rückenlehne in Sitzlängsrichtung zugewandte Strebe mit der Horizontalen einen Winkel von 83° einschließen und die vordere der beiden Streben einen Winkel von 79° mit der Horizontalen einschließen. Die vorgenannten Formen des Rahmens sowie die diesbezüglichen Winkelangaben beziehen sich insbesondere auf den unbelasteten bzw. unverformten Zustand des Fußes. Passagiersitze mit Rahmen, die nicht rechteckförmig sind, sind jedoch Keine Ausführungsbeispiele der Erfindung.

Anzumerken ist, dass die Sitzlängsrichtung senkrecht zur Sitzquerrichtung horizontal verläuft.

Anhand der Figuren sollen im Folgenden Ausführungsbeispiele der Erfindung näher erläutert werden. Dabei zeigt:
- Fig. 1: einen beispielhaften Schienenfahrzeugpassagiersitz für Hochgeschwindigkeitszüge, in einer ersten Stellung seines Fußes in schematischer Darstellung;
- Fig. 2: den Schienenfahrzeugpassagiersitz gemäß Fig. 1 in einer zweiten Stellung seines Fußes;
- Fig. 3: einen beispielhaften Fuß für einen beispielhaften, erfindungsgemäßen Schienenfahr- zeugpassagiersitz in schematischer 2-dimensionaler Ansicht, wobei dieser Fuß bei- spielsweise bei dem Schienenfahrzeugpassagiersitz gemäß Fig. 1 anstelle des dort vorgesehenen Fußes vorgesehen sein kann;
- Fig. 4: den Fuß gemäß Fig. 3 in einer weiteren, 3-dimensionalen Ansicht;
- Fig. 5: einen weiteren, beispielhaften Fuß für einen beispielhaften, erfindungsgemäßen Schienenfahrzeugpassagiersitz in schematischer 2-dimensionaler Ansicht, wobei die- ser Fuß beispielsweise bei dem Schienenfahrzeugpassagiersitz gemäß Fig. 1 anstel- le des dort vorgesehenen Fußes vorgesehen sein kann; und
- Fig. 6: den Fuß gemäß Fig. 5 in einer weiteren, 3-dimensionalen Ansicht;

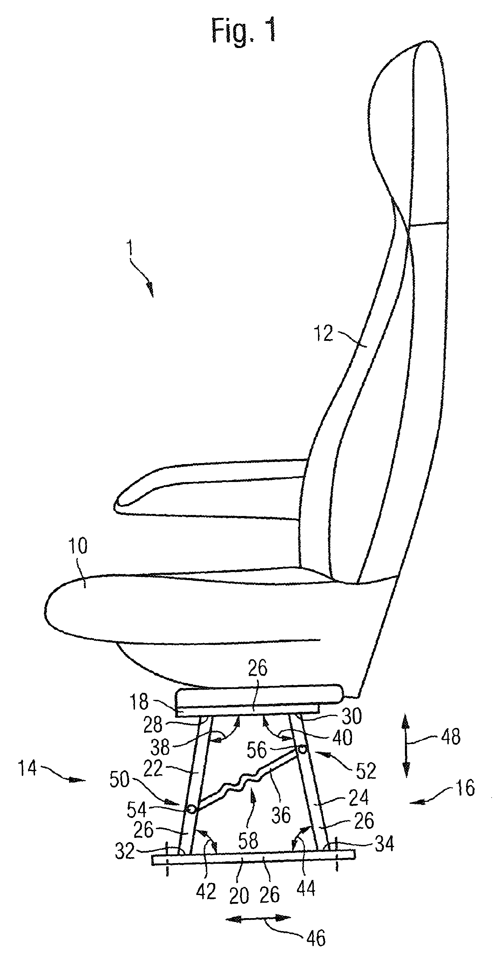

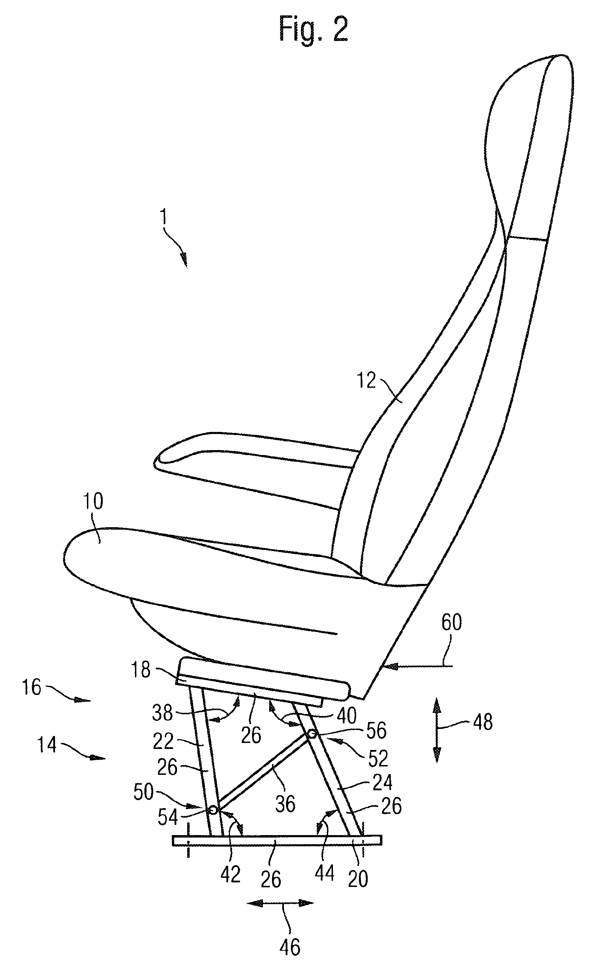

Die Fig. 1 und 2-zeigen einen beispielhaften Schienenfahrzeugpassagiersitz 1 in schematischer Ansicht. Dieser Schienenfahrzeugpassagiersitz 1 kann beispielsweise auf dem Boden eines Wagons eines Schienenfahrzeuges, wie Hochgeschwindigkeitszug, insbesondere ICE, montiert sein. Mehrere derartiger Schienenfahrzeugpassagiersitze 1 können dabei hintereinander bzw. nach Art mehrerer hintereinander angeordneter Sitzreihen angeordnet bzw. auf dem Boden des angesprochenen Wagons montiert sein.

Der Schienenfahrzeugpassagiersitz 1 weist eine Sitzfläche 10, eine Rückenlehne 12 sowie wenigstens einen Fuß 14 auf. Die Sitzfläche 10 sowie die Rückenlehne 12 können jeweils einen Kern sowie eine diese bedeckende Polsterung auf der Oberseite der Sitzfläche 10 bzw. der Vorderseite der Rückenlehne 12 aufweisen. Ferner können die Sitzfläche 10 sowie die Rückenlehne 12 jeweils eine integrierte, besseren Sitzkomfort bietende Federung aufweisen.

Die Sitzfläche 10 erstreckt sich im Wesentlichen horizontal. Die Rückenlehne 12 ragt von der Sitzflächen 10 an deren hinterem Ende nach oben ab. Es kann vorgesehen sein, dass die Rückenlehne 12 - insbesondere hinsichtlich ihres Neigungswinkels gegenüber der Sitzfläche 10 - gegenüber dieser Sitzfläche 10 ver- bzw. einstellbar ist. Hierzu kann eine geeignete Einstelleinrichtung vorgesehen sein.

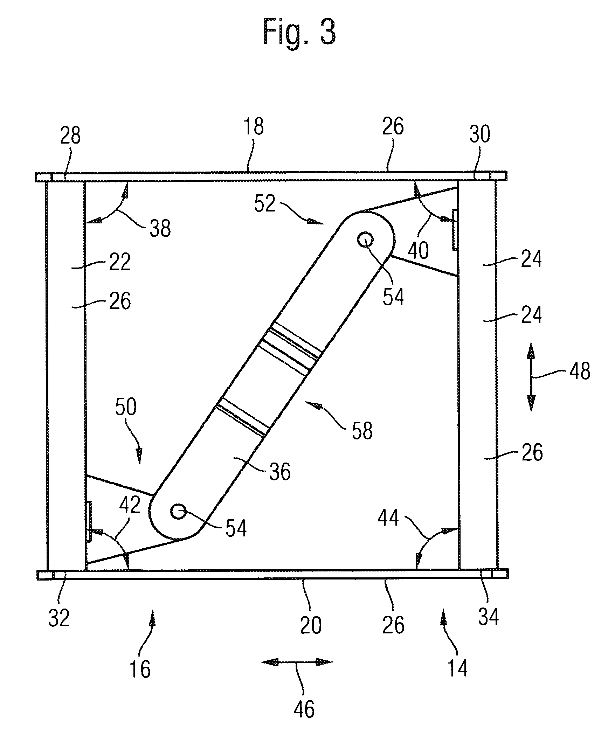

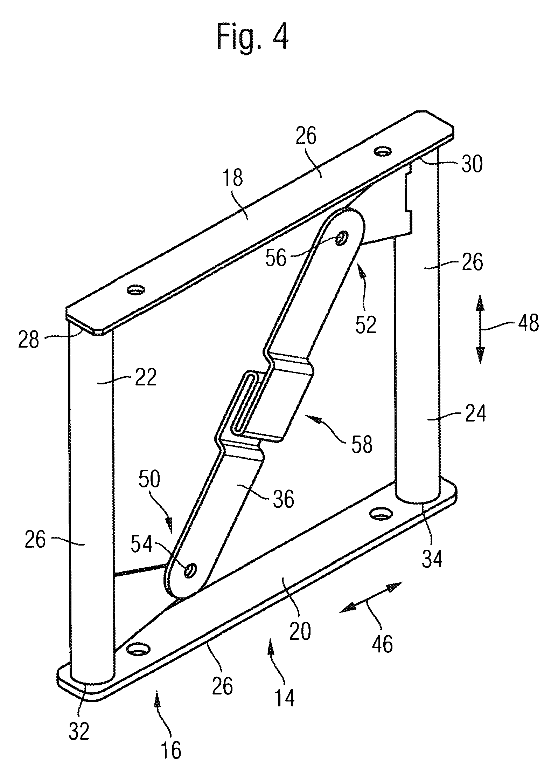

Die Fig. 3 und 4 zeigen einen beispielhaften Fuß 14, der bei einem beispielhaften erfindungsgemäßen Schienenfahrzeugpassagiersitz vorgesehen sein kann; dieser in den Fig. 3 und 4 gezeigte Fuß 14 kann beispielsweise bei dem in den Fig. 1 und 2 gezeigten Schienenfahrzeugpassagiersitz 1 anstelle des dort gezeigten Fußes 14 vorgesehen sein.

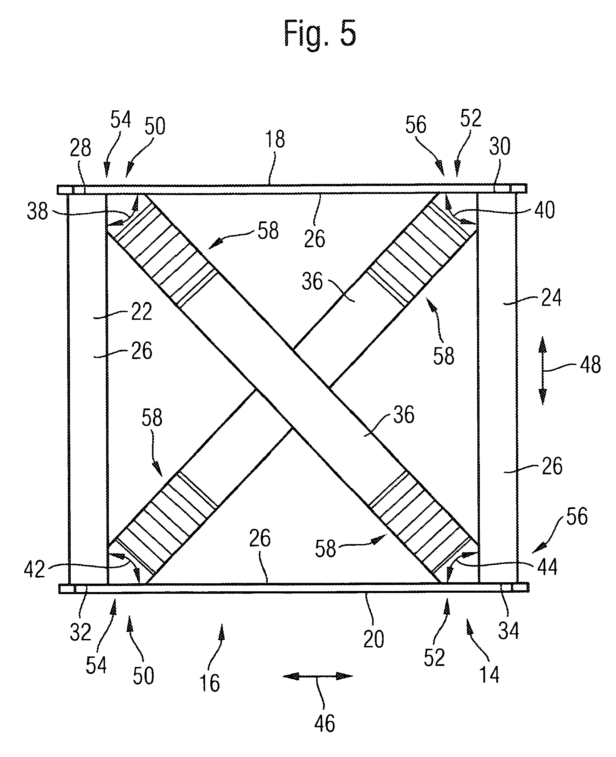

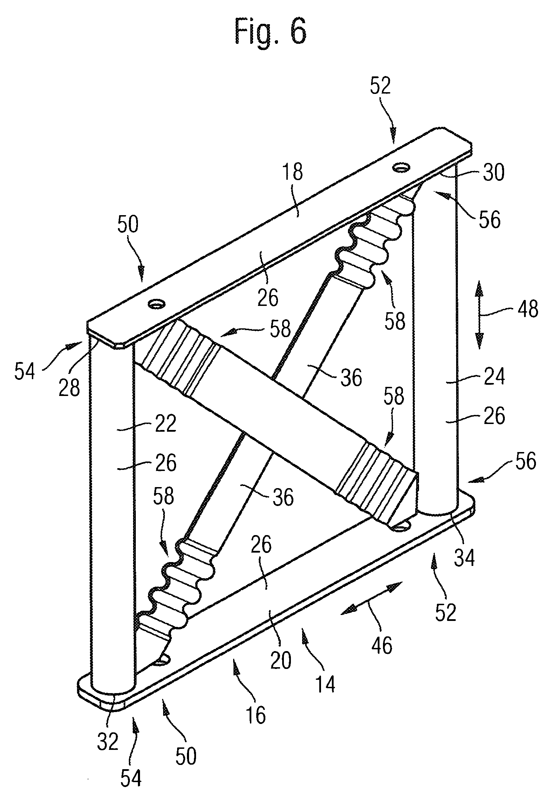

Die Fig. 5 und 6 zeigen einen weiteren beispielhaften Fuß 14, der bei einem beispielhaften erfindungsgemäßen Schienenfahrzeugpassagiersitz vorgesehen sein kann; dieser in den Fig. 5 und 6 gezeigte Fuß 14 kann beispielsweise bei dem in den Fig. 1 und 2 gezeigten Schienenfahrzeugpassagiersitz 1 anstelle des dort gezeigten Fußes 14 vorgesehen sein.

Anzumerken ist, dass ein beispielhafter erfindungsgemäßer Schienenfahrzeugpassagiersitz mehrere Füße 14 der in den Fig. 3 und 4 bzw. in den Fig. 5 und 6 gezeigten Art aufweisen kann. Mehrere solcher jeweiligen Füße 14 können beispielsweise beabstandet und im Wesentlichen parallel zueinander angeordnet sein. In Bezug auf den in den Fig. 1 und 2 gezeigten Schienenfahrzeugpassagiersitz 1 kann dies beispielsweise so sein, dass zwei Füße der genannten Art - senkrecht zur Bildebene gesehen - nebeneinander bzw. hintereinander angeordnet sind. In anderen Worten können mehrere solcher Füße in Querrichtung des Schienenfahrzeugpassagiersitzes nebeneinander angeordnet sein. Beispielsweise können zwei solcher Füße 14 zum Abstützen der Sitzfläche 10 bzw. der Einheit aus der Sitzfläche 10 und der Rückenlehne 12 vorgesehen sein.

Der Fuß 14 gemäß Fig. 1 und 2 bzw. 3 und 4 bzw. 5 und 6 wird von einer Strebeneinrichtung 16 gebildet. Diese Strebeneinrichtung 16 weist eine erste Strebe 18 sowie eine zweite Strebe 20 auf. Die erste Strebe 18 und die zweite Strebe 20 verlaufen jeweils im Wesentlichen horizontal und parallel zueinander. In vertikaler Richtung sind die erste Strebe 18 und die zweite Strebe 20 beabstandet zueinander. Die Strebeneinrichtung 16 weist ferner eine dritte Strebe 22 sowie eine vierte Strebe 24 auf. Mittels dieser dritten Strebe 22 sowie dieser vierten Strebe 24 sind die erste Strebe 18 und die zweite Strebe 20 in vertikaler Richtung auf Abstand gehalten. Zu diesem Zweck sind die dritte Strebe 22 und die vierte Strebe 24 jeweils einerseits mit der ersten Strebe 18 und andererseits mit der Strebe 20 gekoppelt. Die erste Strebe 18, zweite Strebe 20, dritte Strebe 22 und vierte Strebe 24 bilden bzw. definieren im Zusammenwirken einen Rahmen 26. Dieser Rahmen 26 spannt dabei -wie die Fig. 1 bis 6 zeigen - eine Ebene auf.

Diese entsprechenden Kopplungs- bzw. Verbindungsstellen 28, 30, 32, 34, über die die dritte Strebe 22 bzw. vierte Strebe 24 jeweils mit der ersten Strebe 18 und zweiten Strebe 20 gekoppelt sind, sind mittels Schweißverbindungen bzw. Schweißstellen gebildet.

Es ist jedoch auch möglich solche mittels Schweißverbindungen bzw. Schweißstellen gebildeten Kopplungs- bzw. Verbindungsstellen 28 bzw. 30 bzw. 32 bzw. 34 zusätzlich mit Schwenkgelenken bzw. Gelenken und/oder Längsführungen zu kombinieren.

Solche Gelenke können beispielsweise so sein, dass sie im Wesentlichen frei verschwenkbar sind; sie können aber auch so sein, dass sie mit einem Selbsthaltemechanismus, wie beispielsweise Reibmechanismus, versehen sind, so dass - in Bezug auf jedes dieser Gelenke - ein vorbestimmtes Mindestmoment um dieses Gelenk an den jeweils aneinander angrenzenden Streben 18 und 22 bzw. 18 und 24 bzw. 20 und 22 bzw. 20 und 24 wirken muss um ein Verschwenken dieser Streben 18 und 22 bzw. 18 und 24 bzw. 20 und 22 bzw. 20 und 24 zueinander zu bewirken.

Dagegen können Längsführungen beispielsweise so ausgebildet sein, dass an der ersten Strebe 18 und zweiten Strebe 20 jeweils Nuten oder dergleichen vorgesehen sind, in welche die dritte Strebe 22 und die vierte Strebe 24 mit ihren Enden oder dort vorgesehenen Eingriffsteilen eingreifen. Die Nuten erstrecken sich dabei insbesondere auf der der dritten Strebe 22 bzw. vierten Strebe 24 zugewandten Seite der ersten Strebe 18 bzw. zweiten Strebe 20, und zwar insbesondere in

Längsrichtung dieser Streben 18, 20. Es kann vorgesehen sein, dass die Nuten einen im Wesentlichen U-förmigen oder rechteckigen Querschnitt aufweisen. Besonders bevorzugt weisen die Nuten allerdings einen L- oder T-förmigen Querschnitt auf, wobei sie einen Hinter- bzw. Unterschnitt ausbilden, und wobei die angesprochenen Eingriffsteile der dritten Strebe 22 bzw. vierten Strebe 24 jeweils L- bzw. T-förmig gestaltet sind und in die entsprechenden Nuten hingreifend eingreifen.

Kombiniert mit solchen auf Nuten basierenden Kopplungs- bzw. Verbindungsstellen 28 bzw. 30 bzw. 32 bzw. 34 oder kombiniert mit den zuvor beispielhaft angesprochenen, auf Schwenkgelenken basierenden Kopplungs- bzw. Verbindungsstellen 28 bzw. 30 bzw. 32 bzw. 34 kann vorgesehen sein, dass die Streben 18 und 20 mit den Streben 22 und 24 im Bereich dieser Nuten bzw. Gelenke zusätzlich über Schweißpunkte fixiert sind. Bei einer Kombination von Schweißverbindungen bzw. Schweißstellen mit oben genannten Schwenkgelenken und/oder Längsführungen bei den Kopplungs- bzw. Verbindungsstellen 28 bzw. 30 bzw. 32 bzw. 34, können bei einer vorbestimmten Belastung die Schweißpunkte ab- bzw. aufbrechen und entsprechend den mittels der Nuten gebildeten Längsführungen bzw. mittels der Gelenke - insbesondere im Zusammenwirken mit der wenigstens einen im Folgenden noch angesprochenen fünften Strebe 36, die im Folgenden noch angesprochene Relativbewegung bzw. Relatiwerschwenkung der den Rahmen 26 bildenden Streben 18, 20, 22, 24 unter entsprechender Belastung ermöglicht wird bzw. eintritt, und zwar insbesondere ohne dass die Streben des Rahmens 26 voneinander getrennt werden. Die fünfte Strebe 26 kann hierbei eine haltende und/oder dämpfende Wirkung haben. Die Kopplungs- bzw. Verbindungsstellen 28 bzw. 30 bzw. 32 bzw. 34 können allerdings auch auf andere Art ausgebildet sein, als es vorstehend beispielhaft erläutert ist.

In zweckmäßiger Ausgestaltung ist vorgesehen, dass die Kopplungs- bzw. Verbindungsstellen 28 bzw. 30 bzw. 32 bzw. 34, insbesondere Schweißstellen 28 bzw. 30 bzw. 32 bzw. 34, derart ausgebildet sind, dass sie - insbesondere innerhalb der von diesem Rahmen aufgespannten Ebene - eine Verschiebung bzw. Verschwenkung des von den Streben 18, 20, 22, 24 gebildeten Rahmen 26 ermöglichen, die so ist, dass sich die jeweiligen zwischen den jeweils aneinandergrenzenden Streben 16 und 20 bzw. 16 und 22 bzw. 18 und 20 bzw. 18 und 24 gegebenen Winkel 38, 40, 42, 44 - insbesondere unter einer vorbestimmten Belastung - ändern bzw. ändern können, ohne dass die jeweiligen aneinandergrenzenden Streben 16 und 20 bzw. 16 und 22 bzw. 18 und 20 bzw. 18 und 24 im Bereich der jeweils betreffenden Kopplungs- bzw. Verbindungsstelle 28 bzw. 30 bzw. 32 bzw. 34 voneinander getrennt werden bzw. ohne dass die Kopplungs- bzw. Verbindungsstellen 28 bzw. 30 bzw. 32 bzw. 34 dabei öffnen bzw. zerstört werden bzw. brechen. Anzumerken ist in diesem Zusammenhang allerdings, dass bei den beispielhaften Gestaltungen für Kopplungs- bzw. Verbindungsstellen 28 bzw. 30 bzw. 32 bzw. 34, bei denen ein oder mehrere Schweißpunkte unter einer vorbestimmten Belastung aufbrechen, und damit eine Relativbewegung von aneinander zusätzlich mittels eines Gelenks oder einer Längsführung gekoppelten Streben 16 und 20 bzw. 16 und 22 bzw. 18 und 20 bzw. 18 und 24 ermöglichen, ein Nicht-Brechen bzw. Nicht-Öffnen bzw. Nicht-Zerstören selbstverständlich auf die jeweils zugehörige Gelenk- bzw. Längsführungsverbindung bzw. -kopplung und nicht auf die Schweißpunkte bezogen sind.

Anzumerken ist ferner, dass der Fuß 14 in seiner Gesamtheit, also zumindest im Zusammenwirken der Streben 18, 20, 22, 24 mit der wenigstens einen fünften Strebe 36 dabei selbstverständlich eine tragende Wirkung für die Sitzfläche 10 bzw. die Einheit aus der Sitzfläche 10 und der Rückenlehne 12 aufweist, und zwar auch, wenn die Sitzfläche 10 durch einen darauf sitzenden Passagier belastet ist. Beispielsweise kann vorgesehen sein, dass der Fuß 10 einer Belastung von oben standhalten kann, die größer als 2000 N, vorzugsweise größer als 2500 N, vorzugsweise größer als 3000 N, vorzugsweise größer als 3500 N, vorzugsweise größer als 4000 N ist, vorzugsweise größer als 5000 N ist, vorzugsweise größer als 6000 N ist, vorzugsweise größer als 8000 N ist, vorzugsweise größer als 10000 N ist, und zwar insbesondere ohne dass die angesprochene Relativbewegung bzw. Verschiebung bzw. das angesprochen Verschwenken des Rahmens 26 bzw. seiner Streben 18, 20, 22, 24 bewirkt wird.

Wie bereits erwähnt, weist der Fuß 14 ferner zumindest eine fünfte Strebe 36 auf. In den Gestaltungen gemäß den Fig. 1 und 2 bzw. 3 und 4 ist jeweils eine fünfte Strebe 36 gegeben und in der Gestaltung gemäß den Fig. 5 und 6 sind zwei fünfte Streben 36 gegeben. Die fünfte Strebe 36 erstreckt sich geneigt zur horizontalen Richtung 46 und geneigt zu vertikalen Richtung 48. Die fünfte Strebe 36 erstreckt sich innerhalb des Rahmens 26 und ist in ihren beiden Endbereichen 50, 52 mit dem Rahmen 26 gekoppelt, und zwar beispielsweise gelenkig gekoppelt oder verschweißt. Zwischen ihren Koppelstellen 54, 56, mittels welchen die fünfte Strebe 36 mit dem Rahmen 26 gekoppelt ist, weist die fünfte Strebe 36 zumindest einen ersten Abschnitt 58 auf, in dem sie gefaltet oder gewellt oder gekrümmt oder abgeknickt verläuft. In den Gestaltungen gemäß den Fig. 1 bis 4 ist - im unbelasteten Zustand des Fußes bzw. vor einem Crash - jeweils ein erster Bereich 58 gegeben und in der Gestaltung gemäß den Fig. 5 und 6 sind pro fünfter Strebe 36 jeweils zwei beabstandete erste Bereiche 36 gegeben.

In der Gestaltung gemäß Fig. 1 ist der Schienenfahrzeugpassagiersitz 1 bzw. Fuß 14 in einer Stellung vor einem Crash gezeigt und in Fig. 2 ist dieser Schienenfahrzeugpassagiersitz 1 in einer Stellung nach einem Crash gezeigt bzw. in einer Stellung, die in Folge einer Belastung bzw. Kraft 60, die beispielsweise von einem Knie eines Passagiers crashbedingt aufgebracht wurde, bewirkt wurde.

Diesen beiden Fig. 1 und 2 ist gut zu entnehmen, dass sich die Winkel 38, 40, 42, 44 unter der Last bzw. Kraft 60 verändert haben bzw. die jeweils aneinandergrenzenden Streben des Rahmens 26 sich relativ zueinander bewegt haben. In Fig. 1 beträgt der Winkel 42 79° und der Winkel 44 83°; in Fig. 2 hat sich der Winkel 42 gegenüber dem Winkel 42 aus Fig. 1 vergrößert und der Winkel 44 gegenüber dem Winkel 44 aus Fig. 1 verkleinert. Der Rahmen 26 hat hier eine Trapez-Form.

In den Fig. 3 bis 6 hat der Rahmen eine Rechteck-Form bzw. im Wesentlichen eine quadratische Form.

Durch den Crash bzw. die Kraft 60 bedingt hat sich der in Fig. 1 noch gegebene erste Bereich 58 gestreckt, wie Fig. 2 gut zu entnehmen ist. Da die fünfte Strebe 36 in Fig. 2 im Wesentlichen vollständig gerade bzw. gestreckt ist, bildet sie somit eine Begrenzung bzw. eine Art Anschlag, durch welche bzw. durch welchen eine weitere Relativbewegung der Streben 18, 20, 22, 24 blockiert bzw. verhindert wird.

Der erste Bereich 58 ist in den Gestaltungen gemäß den Fig. 1, 5 und 6 gewellt und in der Gestaltung gemäß den Fig. 3 und 4 gefaltet.

In der Gestaltung gemäß den Fig. 1 und 2 ist die fünfte Strebe 36 derart dargestellt, dass ihre in Blickrichtung eines mit seinem Rücken der Rückenlehne 12 zugewandten, auf dem Schienenfahrzeugpassagiersitz 1 sitzenden Passagiers vordere Koppelstelle 54 bzw. vorderen Koppelstellen 56 unterhalb der hinteren Koppelstelle 56 bzw. unterhalb der hinteren Koppelstellung 56 positioniert ist bzw. sind; stattdessen kann die fünfte Strebe 36 bzw. können die fünften Streben 36 auch so positioniert sein, das die hintere Koppelstelle(n) 56 unterhalb der vorderen Koppelstelle(n) 54 positioniert ist bzw. sind. Auch sich kreuzende fünfte Streben 56 entsprechend der Gestaltung gemäß den Fig. 5 und 6 können bei der Gestaltung gemäß den Fig. 1 und 2 - und im Übrigen auch bei der Gestaltung gemäß den Fig. 3 und 4 -in alternativer Gestaltung vorgesehen sein.

Wie gut dem Vergleich der Fig. 1 und 2 zu entnehmen ist, kommt die Rückenlehne 12 einem sich hinter dieser Rückenlehne 12 befindlichen Passagiers, der ggf. auf einem entsprechenden Schienenfahrzeugpassagiersitz 1 sitzt, im Crashfall zumindest in ihrem oberen Bereich entgegen, so dass der Beschleunigungsweg des Passagiers verkürzt wird.

### Bezugszeichenliste

- 1: Schienenfahrzeugpassagiersitz
- 10: Sitzfläche von 1
- 12: Rückenlehne von 1
- 14: Fuß von 1
- 16: Strebeneinrichtung von 14
- 18: erste Strebe von 16
- 20: zweite Strebe von 16
- 22: dritte Strebe von 16
- 24: vierte Strebe von 16
- 26: Rahmen
- 28: Kopplungs- bzw. Verbindungsstelle zwischen 18 und 22
- 30: Kopplungs- bzw. Verbindungsstelle zwischen 18 und 24
- 32: Kopplungs- bzw. Verbindungsstelle zwischen 20 und 22
- 34: Kopplungs- bzw. Verbindungsstelle zwischen 20 und 24
- 36: fünfte Strebe
- 38: Winkel zwischen 18 und 22
- 40: Winkel zwischen 18 und 24
- 42: Winkel zwischen 20 und 22
- 44: Winkel zwischen 20 und 24
- 46: horizontale Richtung
- 48: vertikale Richtung
- 50: Endbereich von 36
- 52: Endbereich von 36
- 54: Koppelstelle für Kopplung von 36 mit 26
- 56: Koppelstelle für Kopplung von 36 mit 26
- 58: erster Abschnitt von 36

## Patentansprüche

1. Schienenfahrzeugpassagiersitz, insbesondere für Hochgeschwindigkeitszüge, mit einer Sitzfläche (10), einer Rückenlehne (12) und mindestens einem die Sitzfläche (10) tragenden Fuß (14),
wobei der Fuß (14) von einer Strebeneinrichtung (16) gebildet wird, die zwei, nämlich eine erste Strebe (18) und eine zweite Strebe (20), jeweils im Wesentlichen horizontal verlaufende Streben (18, 20) aufweist, die mittels zweier weiterer, nämlich einer dritten Strebe (22) und einer vierten Strebe (24), Streben (22, 24) jeweils gekoppelt und in vertikaler Richtung auf Abstand gehalten sind, so dass diese vier Streben (18, 20, 22, 24) einen Rahmen (26) bilden, und dass wenigstens eine weitere, fünfte, zur horizontalen Richtung geneigt verlaufende Strebe (36) sich innerhalb dieses Rahmens (26) erstreckt und in ihren beiden Endbereichen (50, 52) mit dem Rahmen (26) gekoppelt ist, wobei die fünfte Strebe (36) ein Flacheisen ist,
**dadurch gekennzeichnet, dass**
der Rahmen (26) rechteckförmig ist und die fünfte Strebe (36) zwischen ihren Koppelstellen (54, 56), mittels welchen sie mit dem Rahmen (26) gekoppelt ist, zumindest einen ersten Abschnitt (58) aufweist, in dem sie gefaltet oder gewellt oder abgeknickt verläuft, wobei die fünfte Strebe (36) derart gestaltet ist, dass bei einer vorbestimmten auf den Rahmen (26) wirkenden Belastung der wenigstens eine erste Abschnit (58) gestreckt bzw. verlängert wird, und Kopplungsstellen (28,30,32,34) der jeweils aneinander grenzenden ersten Strebe 18 und der dritten Strebe 22, der ersten Strebe 18 und der vierten Strebe 24, der zweiten Strebe 20 und der dritten Strebe 22, und der zweiten Strebe 20 und der vierten Strebe 24 von Schweißstellen gebildet sind, und dass diese Kopplungsstellen (28, 30, 32, 34) derart gebildet sind, dass der Rahmen (26) bei einer durch eine vorbestimmte Belastung bewirkten Relativbewegung jeweils aneinandergrenzender Streben (18, 20, 22, 14) umfangsmäßig geschlossen bleibt.

2. Schienenfahrzeugpassagiersitz nach Anspruch 1,
**dadurch gekennzeichnet, dass**
der von der ersten Strebe (18), zweiten Strebe (20), dritten Strebe (22) und vierten Strebe (24) gebildete Rahmen (26) im Wesentlichen eine, insbesondere im Wesentlichen vertikal verlaufende, Ebene aufspannt.

3. Schienenfahrzeugpassagiersitz nach einem der vorangehenden Ansprüche,
**dadurch gekennzeichnet, dass**
der Fuß (14) eine Ebene aufspannt bzw. sich die erste Strebe (18), die zweite Strebe (20), die dritte Strebe (22), die vierte Strebe (24) sowie die fünfte Strebe (36) im Wesentlichen in einer gemeinsamen Ebene erstrecken.

4. Schienenfahrzeugpassagiersitz nach einem der vorangegangenen Ansprüche,
**dadurch gekennzeichnet, dass**
sich die durch den Fuß (14) aufgespannte Ebene bzw. die Ebene, in der sich die Streben (18, 20, 22, 24) erstrecken, im Wesentlichen senkrecht zur Querrichtung des Passagiersitzes (1) erstreckt.

5. Schienenfahrzeugpassagiersitz nach einem der vorangehenden Ansprüche,
**dadurch gekennzeichnet, dass**
die Streben (18, 20, 22, 24) des Rahmens (26) unter einer vorbestimmten auf den Rahmen (26) wirkenden Belastung relativbeweglich zueinander sind, und zwar insbesondere derart, dass jeweils aneinander gekoppelte Streben des Rahmens (26) dabei bei dieser Relativbewegung in einem gekoppelten Zustand verbleiben.

6. Schienenfahrzeugpassagiersitz nach einem der vorangehenden Ansprüche,
**dadurch gekennzeichnet, dass**
dass die fünfte Strebe (36) derart gestaltet ist, dass beim Strecken des Bereichs (58) die fünfte Strebe (36) eine negative Steifigkeit gefolgt von einer positiven Steifigkeit aufweist.

7. Schienenfahrzeugpassagiersitz nach einem der vorangehenden Ansprüche,
**dadurch gekennzeichnet, dass**
die fünfte Strebe (36) die Relativbeweglichkeit der Streben (18, 20, 22, 24) des Rahmens (26), die bei vorbestimmter Belastung des Rahmens (26) gegeben ist, beschränkt.

8. Schienenfahrzeugpassagiersitz nach einem der vorangehenden Ansprüche,
**dadurch gekennzeichnet, dass**
der Schienenfahrzeugpassagiersitz (1) zwei Füße (14) aufweist.

9. Schienenfahrzeugpassagiersitz nach Anspruch 8.
**dadurch gekennzeichnet, dass**
die Füße (14) in Querrichtung des Schienenfahrzeugpassagiersitz (1) benachbart bzw. beabstandet sind, wobei sich jeweilige vom jeweiligen Rahmen (26) des betreffenden Fußes (14) aufgespannte Ebenen parallel zueinander erstrecken.

10. Schienenfahrzeugpassagiersitz nach einem der Ansprüche 8 oder 9.
**dadurch gekennzeichnet, dass**
die zwei fünften Streben (36) so angeordnet sind, dass sie sich kreuzen.

## Claims

1. A rail vehicle passenger seat, in particular for high-speed trains, with a seat area (10), a backrest (12) and at least one base (14) carrying the seat area (10),
wherein the base (14) is formed by a brace device (16) which has two braces (18, 20), namely a first brace (18) and a second brace (20), which extend substantially horizontally in each case and which are coupled in each case by means of two further braces (22, 24), namely a third brace (22) and a fourth brace (24), and are held at a distance in the vertical direction, so that these four braces (18, 20, 22, 24) form a frame (26), and at least one further, fifth brace (36) extending at an inclination to the horizontal direction extends inside this frame (26) and is coupled to the frame (26) in its two end regions (50, 52), wherein the fifth brace (36) is a flat bar, **characterized in that**
the frame (26) is rectangular and between the coupling points (54, 56) of the fifth brace (36) by means of which it is coupled to the frame (26) the fifth brace (36) has at least one first portion (58) in which it extends folded or corrugated or bent, wherein the fifth brace (36) is designed in such a way that with a pre-determined load acting upon the frame (26) the at least one first portion (58) is stretched or elongated, and coupling points (28, 30, 32, 34) of the first brace 18 and the third brace 22, the first brace 18 and the fourth brace 24, the second brace 20 and the third brace 22, and the second brace 20 and the fourth brace 24 adjacent to one another in each case are formed by welding points, and these coupling points (28, 30, 32, 34) are formed in such a way that the frame (26) remains closed on the periphery during a relative movement - caused by a pre-determined load - of braces (18, 20, 22, 24) adjacent to one another in each case.

2. A rail vehicle passenger seat according to claim 1, **characterized in that** the frame (26) formed by the first brace (18), the second brace (20), the third brace (22) and the fourth brace (24) spans substantially one plane, in particular extending substantially vertically.

3. A rail vehicle passenger seat according to one of the preceding claims, **characterized in that** the base (14) spans a plane and the first brace (18), the second brace (20), the third brace (22), the fourth brace (24) and the fifth brace (36) extend substantially in a common plane.

4. A rail vehicle passenger seat according to any one of the preceding claims, **characterized in that** the plane spanned by the base (14) or the plane in which the braces (18, 20, 22, 24) extend respectively extends substantially at a right angle to the transverse direction of the passenger seat (1).

5. A rail vehicle passenger seat according to any one of the preceding claims, **characterized in that** the braces (18, 20, 22, 24) of the frame (26) are movable relative to one another under a pre-determined load acting upon the frame (26), namely in particular in such a way that braces of the frame (26) coupled to one another in each case remain in a coupled state during this relative movement.

6. A rail vehicle passenger seat according to any one of the preceding claims, **characterized in that** the fifth brace (36) is designed in such a way that during the stretching of the region (58) the fifth brace (36) has a negative rigidity followed by a positive rigidity.

7. A rail vehicle passenger seat according to any one of the preceding claims, **characterized in that** the fifth brace (36) restricts the relative movement of the braces (18, 20, 22, 24) of the frame (26) which occurs in the case of a pre-determined load of the frame (26).

8. A rail vehicle passenger seat according to any one of the preceding claims, **characterized in that** the rail vehicle passenger seat (1) has two bases (14).

9. A rail vehicle passenger seat according to claim 8, **characterized in that** the bases (14) are adjacent or at a distance in the transverse direction of the rail vehicle passenger seat (1), wherein respective planes spanned by respective frames (26) of the base (14) in question extend parallel to one another.

10. A rail vehicle passenger seat according to one of claims 8 or 9, **characterized in that** the two fifth braces (36) are arranged in such a way that they intersect.

## Revendications

1. Siège de passager pour véhicule sur rails, en particulier pour trains à grande vitesse, ayant une surface d'assise (10), un dossier (12) et au moins un pied (14) portant la surface d'assise (10),
dans lequel le pied (14) est formé d'un dispositif à entretoises (16), qui présente deux entretoises (18, 20) s'étendant respectivement sensiblement à l'horizontale, à savoir une première entretoise (18) et une deuxième entretoise (20), qui sont respectivement couplées au moyen de deux autres entretoises (22, 24), à savoir une troisième entretoise (22) et une quatrième entretoise (24), et qui sont maintenues à distance dans la direction verticale de sorte que ces quatre entretoises (18, 20, 22, 24) forment un châssis (26) et qu'au moins une cinquième autre entretoise (36) s'étendant inclinée par rapport à la direction horizontale s'étende à l'intérieur de ce châssis (26) et soit couplée dans ses deux zones d'extrémité (50, 52) au châssis (26), dans lequel la cinquième entretoise (36) est un fer plat,
**caractérisé en ce que**
le châssis (26) est de forme rectangulaire et la cinquième entretoise (36) présente entre ses points de couplage (54, 56), au moyen desquels elle est couplée au châssis (26), au moins une première section (58), dans laquelle elle est plissée ou ondulée ou repliée, dans lequel la cinquième entretoise (36) est conçue de sorte que, lors d'une sollicitation prédéterminée agissant sur le châssis (26), la au moins une première section (58) est étirée ou allongée, et des points de couplage (28,30,32,34) des première entretoise 18 et troisième entretoise 22 respectivement contiguës l'une à l'autre, de la première entretoise 18 et de la quatrième entretoise 24, de la deuxième entretoise 20 et de la troisième entretoise 22, et de la deuxième entretoise 20 et de la quatrième entretoise 24 sont formés par des points de soudage, et **en ce que** ces points de couplage (28, 30, 32, 34) sont formés de sorte que le châssis (26) reste fermé en périphérie lors d'un mouvement relatif provoqué par une sollicitation prédéterminée des entretoises (18, 20, 22, 14) respectivement contiguës les unes aux autres.

2. Siège de passager pour véhicule sur rails selon la revendication 1,
**caractérisé en ce que**
le châssis (26) formé de la première entretoise (18), de la deuxième entretoise (20), de la troisième entretoise (22) et de la quatrième entretoise (24) couvre sensiblement un plan s'étendant en particulier sensiblement à la verticale.

3. Siège de passager pour véhicule sur rails selon l'une quelconque des revendications précédentes,
**caractérisé en ce que**
le pied (14) couvre un plan, respectivement la première entretoise (18), la deuxième entretoise (20), la troisième entretoise (22), la quatrième entretoise (24), ainsi que la cinquième entretoise (36), s'étendent sensiblement dans un plan commun.

4. Siège de passager pour véhicule sur rails selon l'une quelconque des revendications précédentes,
**caractérisé en ce que**
le plan couvert par le pied (14) ou le plan dans lequel les entretoises (18, 20, 22, 24) s'étendent, s'étend de manière sensiblement perpendiculaire à la direction transversale du siège de passager (1).

5. Siège de passager pour véhicule sur rails selon l'une quelconque des revendications précédentes,
**caractérisé en ce que**
les entretoises (18, 20, 22, 24) du châssis (26) sont mobiles les unes par rapport aux autres sous l'effet d'une sollicitation prédéterminée agissant sur le châssis (26) et ce, en particulier de sorte que des entretoises du châssis (26) respectivement couplées l'une à l'autre restent en l'occurrence accouplées lors de ce mouvement relatif.

6. Siège de passager pour véhicule sur rails selon l'une quelconque des revendications précédentes,
**caractérisé en ce que**
la cinquième entretoise (36) est conçue de sorte que, lors de l'étirage de la zone (58), la cinquième entretoise (36) présente une rigidité négative, suivie d'une rigidité positive.

7. Siège de passager pour véhicule sur rails selon l'une quelconque des revendications précédentes,
**caractérisé en ce que**
la cinquième entretoise (36) limite la mobilité relative des entretoises (18, 20, 22, 24) du châssis (26), qui est conférée lors d'une sollicitation prédéterminée du châssis (26).

8. Siège de passager pour véhicule sur rails selon l'une quelconque des revendications précédentes,
**caractérisé en ce que**
le siège de passager pour véhicule sur rails (1) présente deux pieds (14).

9. Siège de passager pour véhicule sur rails selon la revendication 8,
**caractérisé en ce que**
les pieds (14) sont voisins ou écartés dans la direction transversale du siège de passager pour véhicule sur rails (1), dans lequel des plans respectifs couverts par le châssis respectif (26) du pied concerné (14) s'étendent parallèlement l'un à l'autre.

10. Siège de passager pour véhicule sur rails selon l'une quelconque des revendications 8 ou 9,
**caractérisé en ce que**
les deux cinquièmes entretoises (36) sont agencées de manière à se croiser.
